# EUROPÄISCHE PATENTSCHRIFT

(11) **EP 0 601 507 B1**
(45) Veröffentlichungstag und Bekanntmachung des Hinweises auf die Patenterteilung: **16.04.1997**
(21) Anmeldenummer: 93119573.9
(22) Anmeldetag: 04.12.1993
(51) Int. Cl.: G01K 7/02

(54) **Elektrischer Zustandsfühler**
Electrical condition sensor
Capteur électrique d'état

(30) Priorität: 08.12.1992 DE 4241242
(43) Veröffentlichungstag der Anmeldung: 15.06.1994
(73) Patentinhaber: HONEYWELL B.V., NL-1101 EA Amsterdam Z.O. (NL)
(72) Erfinder: Baarda, Gerrit Jan, NL-7824 BJ Emmen (NL)
(74) Vertreter: Rentzsch, Heinz, Dipl.-Ing.

(56) Entgegenhaltungen:
- DE-C- 4 020 167
- FR-A- 2 613 879
- US-A- 4 030 792

## Beschreibung

Die Erfindung betrifft einen elektrischen Zustandsfühler, z.B. einen Temperaturfühler, gemäß Oberbegriff des Anspruchs 1. Bei einem aus DE-C 40 20 167 bekannten Temperaturfühler dieser Art sind die Anschlußdrähte des Fühlerelements über besondere Kontaktfahnen mit dem Anschluß eines äußeren Stromkreises dienenden Klemmschrauben verbunden. Ein die Klemmschraube tragender Anschlußkontakt ist jeweils mit einem Niet an einem Klemmenblock befestigt, wobei zwischen dem Klemmenblock und dem Nietkopf das eine Ende der Kontaktfahne eingeklemmt und durch Lot elektrisch und mechanisch mit dem Nietkopf verbunden ist. Das andere Ende der Kontaktfahne ist mit einem Anschlußdraht des Fühlerelements durch Laserschweißung mechanisch und elektrisch verbunden. Der Klemmenblock ist durch Schraub- oder Nietverbindungen auf eine Befestigungsplatte aufgesetzt, wobei eine Montageplatte aus wärmebeständigem elastischen Werkstoff zwischen Klemmenblock und Befestigungsplatte angeordnet ist, um die bei der Montage des Klemmenblocks auf der Befestigungsplatte auftretenden Kräfte auszugleichen. An die Befestigungsplatte ist das offene Ende eines das Fühlerelement umgebenden Schutzrohres angeschweißt.

Aus der Zeitschrift Siemens Components, 1989, Heft 1 sind Kraftfahrzeug-Steckverbinder in sogenannter IDC-Technik (Insulation-Displacement-Connection) bekannt, bei denen eine gabelförmige Doppel-Schneidklemme beim Aufsetzen auf einen isolierten Anschlußdraht dessen Isolierung durchsticht und aufschneidet.

Ausgehend vom eingangs genannten Stand der Technik werden durch die vorliegende Erfindung Aufbau und insbesondere auch Zusammenbau eines solchen Zustandsfühlers wesentlich vereinfacht.

Von besonderem Vorteil ist dabei, daß einerseits keine Lötverbindung zwischen den Anschlußdrähten des Fühlerelements und den nach außen führenden elektrischen Anschlüssen oder Anschlußfahnen erforderlich ist und andererseits beim Zusammenbau von Grundplatte und Sockel zugleich die elektrische Verbindung des Fühlerelements mit den äußeren Anschlüssen hergestellt wird. Damit entfällt auch die bei Lötverbindungen erforderliche anschließende Reinigung der Lötstellen. Vorteilhafte Ausgestaltungen der Erfindung ergeben sich aus den Unteransprüchen.

Zur Erläuterung der Erfindung wird nachfolgend auf zwei in den Zeichnungen wiedergegebene Ausführungsbeispiele Bezug genommen, wo in
- Fig. 1: ein Eintauch-Temperaturfühler in einer Zwischenstellung beim Zusammenbau als Explosivdarstellung, und
- Fig. 2: im zusammengebauten Zustand wiedergegeben sowie in
- Fig. 3: ein Anlege-Temperaturfühler vor dem endgültigen Zusammenbau in Explosivdarstellung und in
- Fig. 4: in vergrößertem Maßstab als Teilschnitt im zusammengebauten Zustand dargestellt ist.

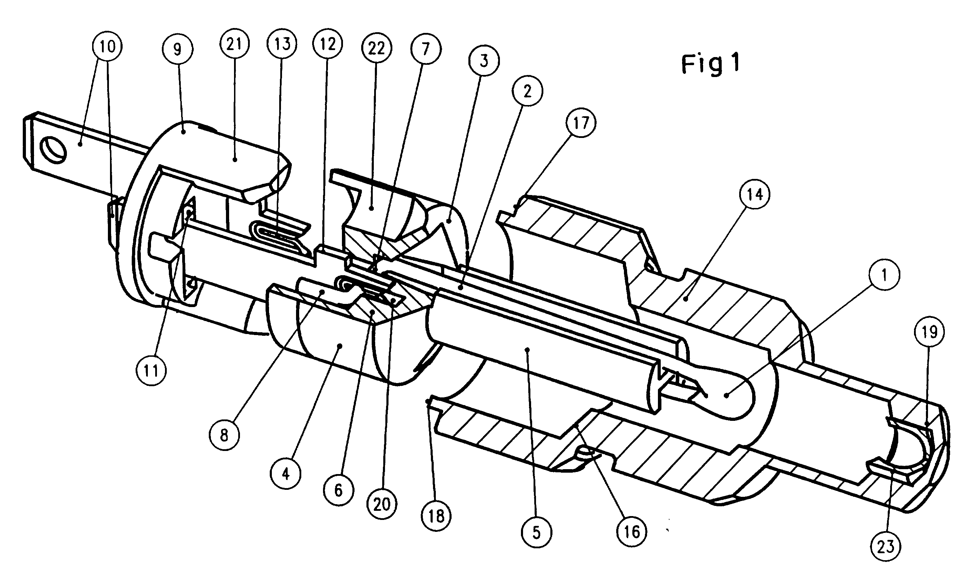

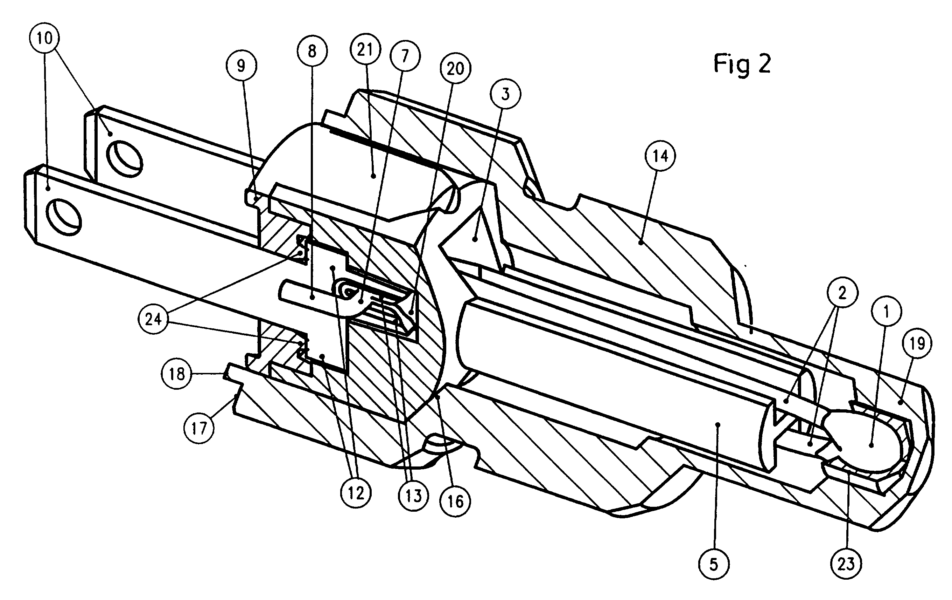

Bei der Ausführungsform nach Fig. 1 und 2 ist das Fühlerelement 1, z.B. ein Thermistor oder Thermoelement, mit seinen Anschlußdrähten 2 in einen Isolierstoffsockel 3 eingesetzt, der aus einem im wesentlichen hohlzylindrischen Flansch 4 und einem der Halterung der Anschlußdrähte und des Fühlerelements dienenden Ansatz 5 besteht. Am Boden 6 des Sockels 3 sind die Drähte 2 rechtwinklig abgewinkelt und liegen mit einem Zwischenstück 7 am Boden 6 des Sockels 3 an. Die Enden 8 der Anschlußdrähte 2 sind ein zweites Mal abgewinkelt und dienen der Lagefixierung der Anschlußdrähte innerhalb des Flanschteils 4 des Sockels 3.

Eine Grundplatte 9 nimmt die elektrischen Anschlußfahnen 10 auf, welche der Verbindung der Anschlußdrähte 2 mit einem äußeren Meßstromkreis dienen. Hierzu ist die Grundplatte 9 mit Schlitzen 11 für die Aufnahme der Anschlüsse 10 versehen, die sich ihrerseits mit seitlichen Vorsprüngen 12 an der Grundplatte 9 abstützen. Die vorderen Enden 13 der Anschlüsse 10 sind gabelförmig geschlitzt und umfassen im zusammengebauten Zustand mit ihren Schenkeln die Zwischenstücke 7 der Anschlußdrähte 2. Der Boden 6 des Sockels 3 erstreckt sich parallel zur Ebene der Grundplatte 9.

Ausgehend von der in Fig. 1 wiedergegebenen Darstellung vor dem Zusammenbau wird beim Zusammenbau die Grundplatte 9 mit einer geeigneten Montagevorrichtung gegen die Schutzkappe 14 gedrückt, welche im Falle eines Temperaturfühlers aus einem gut wärmeleitenden Material, beispielsweise Messing besteht. Dabei legt sich die Grundplatte 9 mit der Umrandung der Schlitze 11 gegen die Vorsprünge 12 und schiebt die Anschlüsse 10 in Richtung Sockel 3. Die gabelförmig geschlitzten Enden 13 der Anschlüsse 12 gleiten über die Zwischenstücke 7 der Anschlußdrähte 2 und stellen einen unter mechanischer Spannung stehenden elektrischen Kontakt mit diesen her. Sofern die Anschlußdrähte 2 von einem Isolierstoffmantel umgeben sind, wird dieser beim Aufschieben der gabelförmigen Enden 13 von diesen durchschnitten und ein metallischer Kontakt zwischen den gabelförmigen Enden der Anschlüsse 10 und den Zwischenstücken 7 der Anschlußdrähte 2 hergestellt. Um Grundplatte 9 und Sockel 3 für den Zusammenbau in ihrer gegenseitigen Winkellage auszurichten und somit ein Verwinden oder gar Beschädigen der Anschlüsse 10 oder ihrer gabelförmigen Endteile 13 zu vermeiden, liegen die Endteile 21 der Befestigungslaschen 38 der Grundplatte 9 mit ihrer Rückseite an Führungsflächen 21 des Sockels 3 an. Die Führungsmittel können auch umgekehrt zugeordnet oder anders ausgebildet sein. Man erzielt einen mechanisch vorgespannten, guten elektrischen Kontakt zwischen den Anschlußdrähten 2 und den Außenanschlüssen 10.

Im Zuge des Zusammenbaus wird der Sockel 3 mit der Stirnseite seines Flanschstücks 4 gegen die umlaufende Innenkante 16 der Schutzkappe 14 gedrückt und stützt sich an dieser ab. Die Unterseite der Grundplatte 9 liegt dann etwa in gleicher Höhe wie die ringförmige Endfläche 17 der Schutzkappe 14. Anschließend wird deren Bördelrand 18 durch ein geeignetes Werkzeug umgebördelt und auf diese Weise ein mechanisch fester Sitz von Sockel 3 und Grundplatte 9 in der Schutzkappe 14 erzielt. Die über die Zwischenstücke 7 der Anschlußdrähte 2 hinausragenden Enden 13 der Anschlüsse 10 ragen in Vertiefungen oder Ausnehmungen 20 des Sockels hinein. Gegebenenfalls verformbare Anschläge 24 an der Grundplatte 9 liegen an den seitlichen Vorsprüngen 12 der Anschlüsse 10 an und gewährleisten einen unverrückbaren Sitz der Anschlüsse zwischen Grundplatte 9 und Sockel 3.

Die Verbindung der Grundplatte 9 mit der Schutzkappe 14 kann auch durch einen thermischen Preßsitz oder durch geeignete Rastmittel, wie Ausnehmungen und in diese eingreifende Vorsprünge, erzielt werden. Im Falle eines Temperaturfühlers ist es zur Verbesserung des Wärmeübergangs von der Schutzkappe 14 auf das Fühlerelement 1 zweckmäßig, zwischen diesem und dem Kopfteil 19 der Schutzkappe 14 eine Wärmeleitpaste 23 einzubringen.

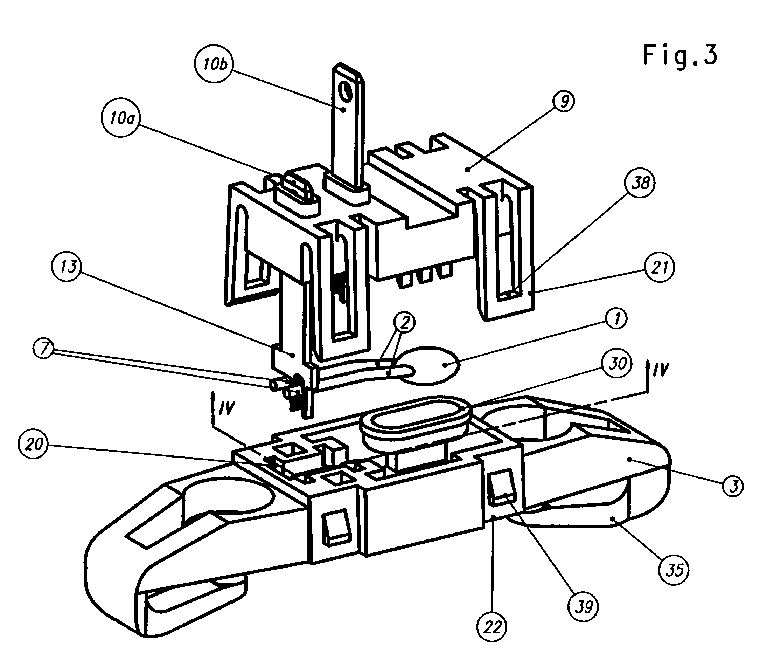

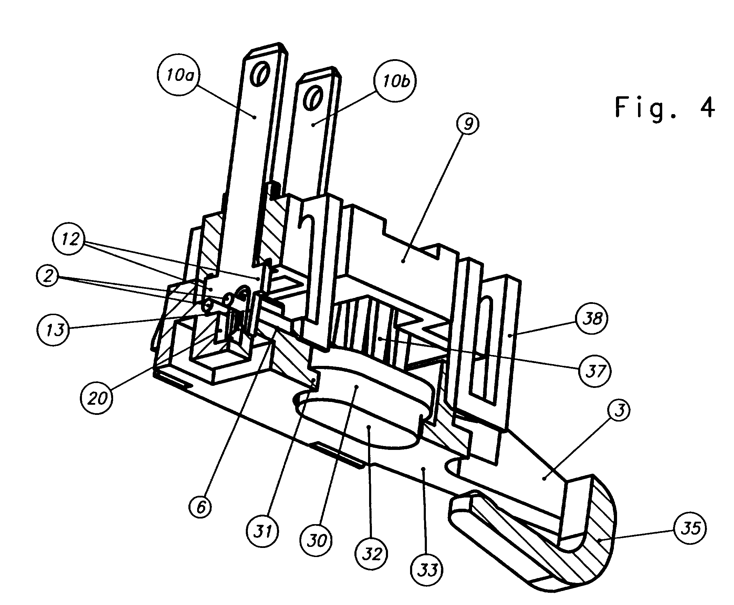

Beim Ausführungsbeispiel gemäß den Figuren 3 und 4 sind die mit der Ausführungsform nach den Figuren 1 und 2 übereinstimmenden Bauteile mit gleichen Bezugszeichen bezeichnet. In Figur 3 ist der Anlege-Temperaturfühler vor dem endgültigen Zusammenbau, aber schon teilweise montiert dargestellt. Figur 4 zeigt einen Teilschnitt längs der Linie IV-IV in Figur 3, ebenfalls in perspektivischer Teilansicht.

In die Grundplatte 9 sind zwei elektrische Anschlußfahnen 10a und 10b eingesetzt, wobei die Anschlußfahne 10b die vor dem Zusammenbau anzutreffende Position einnimmt. Die andere Anschlußfahne 10a ist etwas nach unten herausgezogen dargestellt, um zu zeigen, wie ihr gabelförmiges vorderes Ende 13 den vorderen der beiden Anschlußdrähte 2 des Fühlerelements 1 umfaßt und, wie zuvor geschildert, die gewünschte elektrische Verbindung herstellt. Normalerweise befindet sich die Anschlußfahne 10a in der gleichen Position wie die Anschlußfahne 10b. Erst beim Aufsetzen der Grundplatte 9 auf den Sockel 3 ergreifen die vorderen Enden 13 der beiden Anschlußfahnen 10 die Anschlußdrähte 2 des Temperaturfühlers 1 und stellen die elektrische und mechanische Verbindung her. Dabei liegen die Anschlußdrähte 2 am Boden 6 einer Vertiefung im Sockel 3 auf und stützen sich an diesem ab. Die über die Anschlußdrähte 2 hinausragenden freien Enden der gabelförmigen Endteile 13 der Anschlußfahnen 10 ragen in Ausnehmungen 20 des Sockels 3 hinein.

In den Sockel 3 ist ein Wärmeleitstück 30, beispielsweise aus Aluminium, Messing oder Kupfer, eingesetzt, welches in Figur 3 in einer Position vor dem endgültigen Eindrücken in eine entsprechende Öffnung 31 des Sockels 3 wiedergegeben ist. Im fertig montierten Zustand gemäß Figur 4 liegt die Oberfläche 32 des Wärmeleitstücks 30 etwa in der Ebene der Unterseite 33 des Sockels 3 und kann mit diesem auf einen beliebigen Träger, beispielsweise eine beheizte Fläche aufgesetzt werden. Gegebenenfalls ragt die Oberfläche 32 geringfügig über die Ebene 33 heraus.

Der Sockel 3 ist mit seitlichen elastischen Halteklammern 35 versehen, mit denen er am genannten Träger, beispielsweise einem Wärmeleitblech durch Festklemmen angebracht werden kann.

Um einen guten Wärmekontakt zwischen dem Fühler 1 und der ihm zugewandten Oberfläche 36 des Wärmeleitstücks 30 zu gewährleisten, wird das Fühlelement 1 durch an der Unterseite der Grundplatte 9 angebrachte elastische Druckzapfen 37 gegen die Fläche 36 gedrückt. Zur Verbesserung der Wärmeübertragung empfiehlt es sich, zwischen der Fläche 36 und dem Fühlelement 1 eine Wärmeleitpaste aufzutragen.

Während nach der Ausführungsform gemäß den Figuren 1 und 2 Grundplatte, Sockel und Schutzkappe durch Preßsitz oder durch Umbördeln des freien Randes der Schutzkappe miteinander verbunden sind, zeigt Figur 3 an der Grundplatte 9 seitlich angebrachte elastische Laschen 38, welche mit seitlichen Vorsprüngen 39 des Sockels 3 eine Rastverbindung bilden. Beim Aufstecken der Grundplatte 9 auf den Sockel 3 wird in einem Arbeitsgang eine sichere mechanische Verbindung zwischen diesen beiden Teilen sowie gleichzeitig die elektrische Verbindung zwischen den Anschlußdrähten 2 des Temperaturfühlers 1 und den Anschlußfahnen 10 hergestellt. Auch hier könnte die mechanische Verbindung zwischen Grundplatte 9 und Sockel 3 bei geeigneter Ausgestaltung dieser beiden Teile auf andere Weise, beispielsweise durch Preßsitz oder durch Umbördeln oder Warmverformung einander umgreifender Teile erfolgen.

Die Erfindung ist keineswegs auf Temperaturfühler beschränkt, sondern kann auch bei beliebigen anderen Zustandsfühlern, z.B. Druck-, Durchfluß-, Strahlungs- oder chemischen Fühlern mit Vorteil angewandt werden.

## Patentansprüche

1. Elektrischer Zustandsfühler, z.B. Temperaturfühler, mit wenigstens einem elektrische Anschlußdrähte aufweisenden elektrischen Fühlerelement (1) sowie der Verbindung der elektrischen Anschlußdrähte (2) des Fühlerelements mit einem äußeren Stromkreis dienenden, durch eine Grundplatte (9) hindurchragenden Anschlußelementen (10), **dadurch gekennzeichnet,** daß
a) die Anschlußdrähte (2) des Fühlerelements (1) parallel zur Ebene der Grundplatte (9) verlaufende Teilstücke (7) aufweisen;
b) die Teilstücke (7) sich an einer sich parallel zur Grundplatte (9) erstreckenden Fläche (6) eines das Fühlerelement (1) tragenden Sockels (3) abstützen;
c) die Anschlußelemente (10) an ihren den genannten Teilstücken (7) zugewandten Enden (13) gabelförmig geschlitzt sind;
d) die Breite der Schlitze derart bemessen ist, daß beim Aufschieben der gabelförmigen Enden (13) auf die Teilstücke (7) ein unter mechanischer Spannung stehender metallischer Kontakt zwischen den Anschlußelementen (10) und den Teilstücken (7) hergestellt wird; und
e) Grundplatte (9) und Sockel (3) formschlüssig miteinander verbunden sind.

2. Zustandsfühler nach Anspruch 1, **dadurch gekennzeichnet,** daß die Anschlußdrähte (2) des Fühlerelements (1) von einem Isoliermantel umgeben sind und die Breite der Schlitze der Anschlußelemente (10) derart bemessen ist, daß beim Aufschieben der gabelförmigen Enden (13) auf die Teilstücke (7) die Isolierung durchschnitten und abgestreift und ein unter mechanischer Spannung stehender metallischer Kontakt zwischen den Anschlußelementen (10) und den Teilstücken (7) hergestellt wird.

3. Zustandsfühler nach Anspruch 1 oder 2, **dadurch gekennzeichnet,** daß der Sockel (3) im Bereich der gabelförmigen Enden (13) der Anschlußelemente (10) mit entsprechenden Vertiefungen oder Ausnehmungen (20) versehen ist.

4. Zustandsfühler nach einem der Ansprüche 1 bis 3, **dadurch gekennzeichnet,** daß die Anschlußelemente (10) zur Abstützung an der Grundplatte (9) mit seitlichen Vorsprüngen (12) versehen sind.

5. Zustandsfühler nach Anspruch 4, **dadurch gekennzeichnet,** daß die Grundplatte (9) mit den seitlichen Vorsprüngen (12) der Anschlußelemente (10) gegenüberstehenden, gegebenenfalls verformbaren Anschlägen (24) versehen ist.

6. Zustandsfühler nach einem der Ansprüche 1 bis 5, **gekennzeichnet durch** die relative Winkellage von Sockel (3) und Grundplatte (9) bestimmende Führungsmittel (21, 22).

7. Zustandsfühler nach einem der Ansprüche 1 bis 6, **dadurch gekennzeichnet,** daß die Enden der Anschlußdrähte (2) zweifach abgewinkelt sind, die gabelförmigen Schlitze der Anschlußelemente (10) auf den Zwischenteilstücken (7) sitzen und die Endteile (8) der Drähte (2) deren Lagefixierung im Sockel (3) dienen.

8. Zustandsfühler nach einem der Ansprüche 1 bis 7, **dadurch gekennzeichnet,** daß das Fühlerelement (1) von einer Schutzkappe (14) umgeben und die Schutzkappe (14) mit wenigstens einer umlaufenden Innenkante (16) als Einbauanschlag für den Sockel (3) versehen ist.

9. Zustandsfühler nach Anspruch 8, **dadurch gekennzeichnet,** daß die Schutzkappe (14) den Sockel (3) und die Grundplatte (9) überdeckt und auf ihrer die Grundplatte (9) aufnehmenden Seite mit einem Bördelrand (18) zur formschlüssigen Verbindung von Grundplatte (9), Sockel (3) und Schutzkappe (14) versehen ist.

10. Zustandsfühler nach einem der Ansprüche 1 bis 7, **dadurch gekennzeichnet,** daß bei einem Temperaturfühler im Sockel (3) ein metallisches Wärmeleitstück (30) gehalten ist, an welchem das Fühlerelement (1) anliegt und welches auf der dem Fühlerelement abgewandten Seite (30) zwecks Anlage an einem Träger zugängig ist, z.B. aus dem Sockel herausragt.

11. Zustandsfühler nach Anspruch 10, **dadurch gekennzeichnet,** daß die Grundplatte (9) mit elastisch verformbaren Andruckelementen (37) versehen ist, welche im zusammengebauten Zustand des Temperaturfühlers das Fühlerelement (1) gegen das Wärmeleitstück (30) drücken.

12. Zustandsfühler nach einem der Ansprüche 1 bis 8, 10 oder 11, **dadurch gekennzeichnet,** daß Grundplatte (9) und Sockel (3) bzw. Grundplatte (9), Sockel (3) und Schutzkappe (14) im Preßsitz miteinander verbunden sind.

13. Zustandsfühler nach einem der Ansprüche 1 bis 8, 10 oder 11, **dadurch gekennzeichnet**, daß Grundplatte (9) und Sockel (3) bzw. Schutzkappe (14) und Grundplatte (9) zur formschlüssigen Verbindung mit elastischen Rastmitteln versehen sind.

14. Zustandsfühler nach einem der Ansprüche 1 bis 13, **dadurch gekennzeichnet,** daß bei einem Temperaturfühler (14) zwischen dem Fühlerelement (1) einerseits und der Innenwand der Schutzkappe (14) bzw. dem Wärmeleitstück (34) andererseits eine Wärmeleitpaste (23) eingebracht ist.

15. Zustandsfühler nach einem der Ansprüche 1 bis 14, **dadurch gekennzeichnet,** daß der Sockel (3) mit Befestigungsmitteln (35) zum Befestigen des Zustandsfühlers an einem Träger versehen ist.

## Claims

1. Electrical condition sensor, e.g. temperature sensor, comprising at least one sensor element (1) provided with electrical connection wires, and further comprising terminal elements (10) extending through a base plate (9) for connecting said electrical connection wires (2) to an external circuit;
**characterized in that**:
a) the connection wires (2) of said sensor element (1) include portions (7) extending parallel to the plane of said base plate (9);
b) said portions (7) abut against a surface (6) of a socket (3) supporting said sensor element (1) with said surface extending parallel to said base plate (9);
c) said terminal elements (10) are slotted fork-like at their ends (13) facing said portions (7);
d) the width of the slots is chosen such that when moving the fork-like end pieces (13) across said portions (7) a metallic and mechanically spring-biased contact is achieved between said terminal elements (10) and said portions (7); and
e) the base plate (9) and the socket (3) are connected together in a positively locking manner.

2. The condition sensor of claim 1, **characterized in that** connection wires (2) of the sensor element (1) are covered by an insulating layer and the width of said slots in said terminal elements (10) is chosen such that when pushing the fork-like end pieces (13) onto said portions (7), said insulating layer is cut and removed and a mechanically spring-biased metallic contact is achieved between said terminal elements (10) and said portions (7).

3. The condition sensor of claim 1 or 2, **characterized in that** in the area of said fork-like end pieces (13) said socket (3) is provided with corresponding recesses or openings (20).

4. The condition sensor according to one of the claims 1 to 3, **characterized in that** for abutting against the base plate (9) said terminal elements (10) are provided with lateral projections (12).

5. The condition sensor of claim 4, **characterized in that** the base plate (9) is provided with possibly deformable abutments (24) located opposite said lateral projections (12) of the terminal elements (10).

6. The condition sensor according to one of the claims 1 to 5, **characterized by** guiding means (21, 22) determining the relative angular position of said socket (3) and said base plate (9).

7. The condition sensor according to one of the claims 1 to 6, **characterized in that** the end portions of the connection wires (2) are bent two-fold, the fork-like slots of the terminal elements (10) rest on the intermediate portions (7), and the ends (8) of said wires (2) determine the position of said wires in said socket (3).

8. The condition sensor according to one ofthe claims 1 to 7, **characterized in that** the sensor element (1) is covered by a protective cap (14), which by means of at least one surrounding inner edge (16) constitutes an assembly abutment for said socket (3).

9. The condition sensor of claim 8, **characterized in that** said protective cap (14) covers said socket (3) and said base plate (9) and on its side receiving the base plate (9) has a bordering edge (18) for connecting said base plate (9), said circuit (3) and said protective cap (14) in a positive locking manner.

10. The condition sensor according to one of the claims 1 to 7, **characterized in that** in case of a temperature sensor a metallic heat-conducting piece (30) is held in said socket (3), which heat-conducting piece engages said sensor element (1), and on its side (30) opposite from said sensor element is available for abutting against a carrier, e.g. projects out of that socket.

11. The condition sensor of claim 10, **characterized in that** said base plate (9) is provided with resiliently deformable pressure elements (37) which in the assembled condition of the temperature sensor press said sensor element (1) against said heat conducting piece (30).

12. The condition sensor according to one of the claims 1 to 8, 10 or 11, **characterized in that** said base plate (9) and said socket (3) or said base plate (9), said socket (3), and said protective cap (14), respectively, are connected together by a pinch fit.

13. The condition sensor according to one of the claims 1 to 8, 10 or 11, **characterized in that** said base plate (9) and said socket (3) or said protective cap (14) and said base plate (9), respectively, are provided with resilient notching means for achieving a positively locking connection.

14. The condition sensor according to one ofthe claims 1 to 13, **characterized in that** in case of a temperature sensor a heat-conducting paste (23) is provided between said sensor element (1) on the one side and the internal wall of said protective cap (14) or said heat-conducting piece (34); respectively, on the other side.

15. The condition sensor according to one of the claims 1 to 14, **characterized in that** said socket (3) has fastening means (35) for fastening the condition sensor at a support structure.

## Revendications

1. Capteur électrique d'état, par exemple capteur de température, comportant au moins un élément de capteur électrique (1) présentant des fils électriques de raccordement, ainsi que des éléments de raccordement (10) traversant une plaque de base (9) et servant à relier les fils électriques de raccordement (2) de l'élément de capteur à un circuit extérieur,
caractérisé en ce que
a) les fils de raccordement (2) de l'élément de capteur (1) comportent des tronçons (7) s'étendant parallèlement au plan de la plaque de base (9);
b) les tronçons (7) s'appuient sur une surface (6) d'une embase (3) portant l'élément de capteur (1), cette surface s'étendant parallèlement à la plaque de base (9);
c) les éléments de raccordement (10) sont fendus en forme de fourche à leurs extrémités (13) dirigées vers les tronçons (7) cités;
d) la largeur des fentes est dimensionnée de manière telle que, lors de l'engagement des extrémités (13) en forme de fourche sur les tronçons (7), il s'établisse un contact métallique sous contrainte mécanique de tension entre les éléments de raccordement (10) et les tronçons (7); et
e) la plaque de base (9) et l'embase (3) sont assemblées l'une à l'autre par complémentarité de formes.

2. Capteur d'état selon la revendication 1, caractérisé en ce que les fils de raccordement (2) de l'élément de capteur (1) sont entourés d'une enveloppe isolante, et la largeur des fentes des éléments de raccordement (10) est dimensionnée de manière telle que, lors de l'engagement des extrémités (13) en forme de fourche sur les tronçons (7), l'isolation soit sectionnée et enlevée, et qu'il s'établisse un contact métallique sous contrainte mécanique de tension entre les éléments de raccordement (10) et les tronçons (7).

3. Capteur d'état selon la revendication 1 ou 2, caractérisé en ce que l'embase (3) est pourvue, dans la zone des extrémités (13) en forme de fourche des éléments de raccordement (10), de creux ou d'évidements (20) correspondants.

4. Capteur d'état selon l'une des revendications 1 à 3, caractérisé en ce que les éléments de raccordement (10) sont pourvus de protubérances latérales (12) pour leur appui sur la plaque de base (9).

5. Capteur d'état selon la revendication 4, caractérisé en ce que la plaque de base (9) est pourvue de butées (24), éventuellement déformables, placées en regard des protubérances latérales (12) des éléments de raccordement (10).

6. Capteur d'état selon l'une des revendications 1 à 5, caractérisé par des moyens de guidage (21, 22) déterminant la position angulaire relative de l'embase (3) et de la plaque de base (9).

7. Capteur d'état selon l'une des revendications 1 à 6, caractérisé en ce que les extrémités des fils de raccordement (2) sont coudées deux fois, les fentes en forme de fourche des éléments de raccordement (10) portent sur les tronçons intermédiaires (7), et les parties d'extrémité (8) des fils (2) servent à leur fixation en position dans l'embase (3).

8. Capteur d'état selon l'une des revendications 1 à 7, caractérisé en ce que l'élément de capteur (1) est entouré d'une calotte de protection (14), et la calotte de protection (14) est pourvue d'au moins un bord intérieur périphérique (16) faisant office de butée de montage pour l'embase (3).

9. Capteur d'état selon la revendication 8, caractérisé en ce que la calotte de protection (14) recouvre l'embase (3) et la plaque de base (9), et est pourvue, sur son côté recevant la plaque de base (9), d'un bord relevé (18) pour réaliser l'assemblage par complémentarité de formes de la plaque de base (9), de l'embase (3) et de la calotte de protection (14).

10. Capteur d'état selon l'une des revendications 1 à 7, caractérisé en ce que, dans le cas d'un capteur de température, dans l'embase (3) est maintenue une pièce métallique de conduction de chaleur (30), sur laquelle s'applique l'élément de capteur (1) et qui, sur le côté (32) opposé à l'élément de capteur, est accessible en vue de s'appuyer sur un support, par exemple en faisant saillie hors de l'embase.

11. Capteur d'état selon la revendication 10, caractérisé en ce que la plaque de base (9) est pourvue d'éléments d'application (37) qui peuvent être déformés de manière élastique et qui, dans l'état assemblé du capteur de température, pressent l'élément de capteur (1) contre la pièce de conduction de chaleur (30).

12. Capteur d'état selon l'une des revendications 1 à 8, 10 ou 11, caractérisé en ce que la plaque de base (9) et l'embase (3) ou la plaque de base (9), l'embase (3) et la calotte de protection (14) sont assemblées les unes aux autres par un ajustement à force.

13. Capteur d'état selon l'une des revendications 1 à 8, 10 ou 11, caractérisé en ce que la plaque de base (9) et l'embase (3) ou la calotte de protection (14) et la plaque de base (9) sont pourvues de moyens d'encliquetage élastiques pour leur assemblage par complémentarité de formes.

14. Capteur d'état selon l'une des revendications 1 à 13, caractérisé en ce que, dans le cas d'un capteur de température (14), une pâte de conduction de chaleur (23) est insérée entre l'élément de capteur (1), d'une part, et la paroi intérieure de la calotte de protection (14) ou la pièce de conduction de chaleur (30), d'autre part.

15. Capteur d'état selon l'une des revendications 1 à 14, caractérisé en ce que l'embase (3) est pourvue de moyens de fixation (35) pour la fixation du capteur d'état à un support.
